# EUROPÄISCHE PATENTANMELDUNG

(11) **EP 2 020 275 A2**
(43) Veröffentlichungstag der Anmeldung: **04.02.2009**
(21) Anmeldenummer: 08104282.2
(22) Anmeldetag: 06.06.2008
(51) Int. Cl.: B23Q 11/00, F16P 3/14, H02H 5/12, B27B 17/08, B27G 19/00

(54) **Automatische Sicherheitsabschaltung von Werkzeugen oder Arbeitsgeräten**

(30) Priorität: 31.07.2007 DE 102007035822
(71) Anmelder: ROBERT BOSCH GMBH, 70442 Stuttgart (DE)
(72) Erfinder: Garbaa, Kieredin Allister, 70180, Stuttgart (DE)

(57) **Zusammenfassung**

Die Erfindung betrifft ein Verfahren und eine Vorrichtung (2) zum Schutz einer Person (4) vor Verletzungen durch ein von einem Motor (14) angetriebenes Werkzeug oder Arbeitsgerät (6), insbesondere durch eine Motorkettensäge (6). Es ist vorgesehen, dass von mindestens einem mit dem Werkzeug oder Arbeitsgerät (6) verbundenen Sender (10) ein das Werkzeug oder Arbeitsgerät (6) mindestens teilweise umgebendes elektromagnetisches Feld (W) erzeugt wird, dass in mindestens einer Leiterschleife (22, 24) einer Schutzbekleidung (18) der Person (4) eine Spannung induziert wird, wenn das Werkzeug oder Arbeitsgerät (6) an die Schutzbekleidung (18) angenähert wird, und dass das Werkzeug oder Arbeitsgerät (6) deaktiviert wird, wenn die induzierte Spannung einen vorbestimmten Schwellenwert übersteigt.

## Beschreibung

Die Erfindung betrifft ein Verfahren und eine Vorrichtung zum Schutz einer Person vor Verletzungen durch ein von einem Motor angetriebenes Werkzeug oder Arbeitsgerät, insbesondere durch eine Motorkettensäge, gemäß dem Oberbegriff der Ansprüche 1 bzw. 6.

### Stand der Technik

Zu Abwendung von Schnittverletzungen beim Umgang von Personen mit Motorkettensägen, insbesondere bei Waldarbeiten, ist in Deutschland das Tragen einer speziellen Schutzbekleidung vorgeschrieben. Bekannte Schutzbekleidung für diesen Zweck weist mehrschichtige Schnittschutzeinlagen aus Aramidfasern (Kevlar) auf. Bei einem Kontakt des Sägeschwerts der Kettensäge mit der Schutzbekleidung verfangen sich die Aramidfasern in den Sägezähnen der Kettensäge, wodurch die letztere nach einer gewissen Zeit zum Stillstand kommt. Trotz der Schnittschutzeinlagen kann jedoch ein Kontakt zwischen dem Sägeschwert bzw. den Sägezähnen der Motorkettensäge und dem Körper der Personen nicht immer vollständig vermieden werden, wodurch sich die Personen trotz der Schutzbekleidung ernste Verletzungen zuziehen können. Dies führt unter anderem dazu, dass die Lohnnebenkosten in der Forstwirtschaft sehr hoch sind.

Aus der EP 0 850 385 B1 ist bereits ein Verfahren und eine Vorrichtung zur Erfassung der Distanz zwischen einem zu schützenden ersten Objekt, zum Beispiel einer Person, und einem in Bezug zum ersten Objekt bewegten zweiten Objekt, zum Beispiel einer Motorkettensäge, bekannt, wobei die Kettensäge abgeschaltet wird, wenn ein Sicherheitsabstand zwischen dem ersten und dem zweiten Objekt unterschritten wird. Das bekannte Verfahren basiert darauf, dass mit der zu schützenden Person ein Hochfrequenzgenerator und mit der sich bewegenden Motorkettensäge ein Hochfrequenzempfänger verbunden ist, der ein vom Generator erzeugtes kapazitives Näherungssignal empfängt, das beim Unterschreiten des Sicherheitsabstands einen vorgegebenen Schwellenwert übersteigt. Jedoch hängt das kapazitive Näherungssignal sehr stark von der Kapazität zwischen der Hand des Benutzers und dem Griff der Motorkettensäge ab. Diese wiederum unterliegt starken Schwankungen, je nachdem ob die Person zum Beispiel den Griff der Kettensäge mit trockenen Handschuhen oder mit feuchten Händen ergreift, so dass auch der Sicherheitsabstand starken Schwankungen unterworfen ist. Dadurch ist es bei der bekannten Vorrichtung äußerst problematisch, ein gleichbleibendes Ansprechverhalten sicherzustellen.

Ausgehend hiervon liegt der Erfindung die Aufgabe zugrunde, ein Verfahren und eine Vorrichtung der eingangs genannten Art dahingehend zu verbessern, dass Verletzungen der zu schützenden Person sicher vermieden und ein von äußeren Umständen unabhängiges gleichbleibendes Ansprechverhalten gewährleistet werden kann.

### Offenbarung der Erfindung

Zur Lösung dieser Aufgabe wird bei dem erfindungsgemäßen Verfahren ein das Werkzeug oder Arbeitsgerät mindestens teilweise umgebendes elektromagnetisches Feld erzeugt, das in mindestens einer Leiterschleife einer Schutzbekleidung der Person eine Spannung induziert, wenn das Werkzeug oder Arbeitsgerät an die Schutzbekleidung angenähert wird, und das Werkzeug oder Arbeitsgerät wird deaktiviert, wenn die induzierte Spannung einen vorbestimmten Schwellenwert übersteigt.

Die erfindungsgemäße Vorrichtung umfasst mindestens einen mit dem Werkzeug oder Arbeitsgerät verbundenen Sender zur Erzeugung eines das Werkzeug oder Arbeitsgerät mindestens teilweise umgebenden elektromagnetischen Feldes, eine für die zu schützende Person bestimmte Schutzbekleidung, die mindestens eine Leiterschleife enthält, sowie eine Einrichtung zum Deaktivieren des Werkzeugs, wenn eine bei einer Annäherung des oder eines Senders des Werkzeugs oder Arbeitsgeräts an die Schutzbekleidung in der Leiterschleife induzierte Spannung einen vorbestimmten Schwellenwert übersteigt.

Die in der Forstwirtschaft eingesetzten Motorkettensägen werden in der Regel durch einen Verbrennungsmotor angetrieben, der zur Verminderung der Abgasemissionen zunehmend häufiger mit einer Motorsteuerung ausgestattet wird, welche zur Deaktivierung der Motorkettensäge durch Abschaltung des Verbrennungsmotors verwendet werden kann, wenn zum Beispiel die induzierte Spannung infolge einer großen Annäherung des Sägeschwerts an die Schutzbekleidung den vorbestimmten Schwellenwert übersteigt.

Eine bevorzugte Ausgestaltung der Erfindung sieht vor, dass die mindestens eine Leiterschleife der Schutzbekleidung mit einer Mess- und Auswerteeinrichtung verbunden ist, welche die in der Leiterschleife induzierte Spannung misst und mit dem vorbestimmten Schwellenwert vergleicht, und welche zweckmäßig ein Abschaltsignal an die Motorsteuerung des Werkzeugs oder Arbeitsgeräts überträgt, wenn der vorbestimmte Schwellenwert der Spannung überschritten wird.

Der Begriff Schutzbekleidung im Rahmen der vorliegenden Anmeldung umfasst sowohl Bekleidungsstücke, wie zum Beispiel Hosen oder Jacken, als auch Schuhwerk. Vorzugsweise sind an mehreren Stellen in der Schutzbekleidung bzw. des jeweiligen Bekleidungsstücks Leiterschleifen vorgesehen, wie an den Vorderseiten der Hosenbeine, in den beiden Jackenärmeln und/oder an der Oberseite der beiden Schuhe. Zweckmäßig sind diese Leiterschleifen jeweils mit zugehörigen Anschlüssen der Mess- und Auswerteeinrichtung verbindbar, so dass bei Bedarf andere Bekleidungsstücke bzw. anderes Schuhwerk an die Mess- und Auswerteeinrichtung angeschlossen werden können. Der Anschluss der einzelnen Leiterschleifen an die Mess- und Auswerteeinrichtung erfolgt vorzugsweise in Parallelschaltung.

Die Mess- und Auswerteeinrichtung ist vorzugsweise in die Schutzbekleidung integriert, wobei sie zweckmäßig einen Teil eines Bekleidungsstücks bildet und zum Beispiel am Gürtel einer Arbeitshose getragen wird.

Wenn es sich bei dem Werkzeug oder Arbeitsgerät um eine Kettensäge handelt, kann das elektromagnetische Feld von mindestens einem Sender erzeugt werde, der zweckmäßig in einem Motorgehäuse der Kettensäge untergebracht ist und die für das elektromagnetische Feld benötigte Energie über eine oder ggf. auch mehrere Antennen in die Umgebung des Sägeschwerts abstrahlt. Alternativ dazu kann jedoch auch eine Mehrzahl von Sendern verwendet werden. Sofern diese Sender dieselbe Sendeleistung besitzen, sind sie zweckmäßig in gleichen Abständen vom Bewegungspfad einer Sägekette der Kettensäge angeordnet sind, so dass eine starke Annäherung der Spitze des Sägeschwerts an die Schutzbekleidung, zum Beispiel an das Schuhwerk oder an die Hose der zu schützenden Person, ebenso zu einer Deaktivierung des Werkzeugs oder Arbeitsgeräts führt, wie eine starke Annäherung eines näher beim Motor der Kettensäge befindlichen Teils des Sägeschwerts an die Schutzbekleidung, zum Beispiel an einen Jackenärmel der zu schützenden Person. Bei unterschiedlich starken Sendeleistungen kann der Abstand der Sender von der Sägekette jedoch auch unterschiedlich sein.

Vorzugsweise erfolgt die Abschaltung des Werkzeugs oder Arbeitsgeräts dann, wenn sein Eingriffselement, d.h. bei einer Motorkettensäge die Sägekette, näher als etwa 100 mm und vorzugsweise näher als etwa 50 mm an die Schutzbekleidung angenähert wird. An Stelle einer Abschaltung des Verbrennungsmotors kann zur Deaktivierung auch eine Kupplung im Antriebsstrang des Werkzeugs oder Arbeitsgeräts ausgerückt werden, bei einer Motorkettensäge zum Beispiel eine Kupplung zwischen dem Antriebsmotor und einem Kettenstern der Sägekette.

Die Übertragung des Abschaltsignals von der Mess- und Auswerteeinrichtung zur Motorsteuerung des Arbeitsgeräts oder Werkzeugs erfolgt bevorzugt drahtlos mit Hilfe eines mit der Mess- und Auswerteeinrichtung verbundenen Senders, der das Abschaltsignal zu einem mit der Motorsteuerung verbundenen Empfänger überträgt. Dadurch wird vermieden, dass die Schutzbekleidung mit dem Werkzeug oder Arbeitsgerät durch ein Kabel verbunden werden muss, das bei der Arbeit mit dem Werkzeug oder Arbeitsgerät eher hinderlich ist. Grundsätzlich ist jedoch auch eine Übertragung durch ein Kabel möglich.

### Kurze Beschreibung der Zeichnung

Im folgenden wird die Erfindung anhand eines in der Zeichnung schematisch dargestellten Ausführungsbeispiels näher erläutert. Es zeigen:
Fig. 1 eine Ansicht einer Vorrichtung zum Schutz eines Benutzers einer Motorkettensäge vor Verletzungen;
Fig. 2 ein Blockdiagramm zur Erläuterung der Funktionsweise der Vorrichtung.

### Ausführungsform der Erfindung

Die in der Zeichnung dargestellte Vorrichtung 2 dient zum Schutz eines Benutzers 4 einer Motorkettensäge 6 vor Verletzungen infolge eines Kontakts mit einer umlaufenden Sägekette 8 der Kettensäge 6.

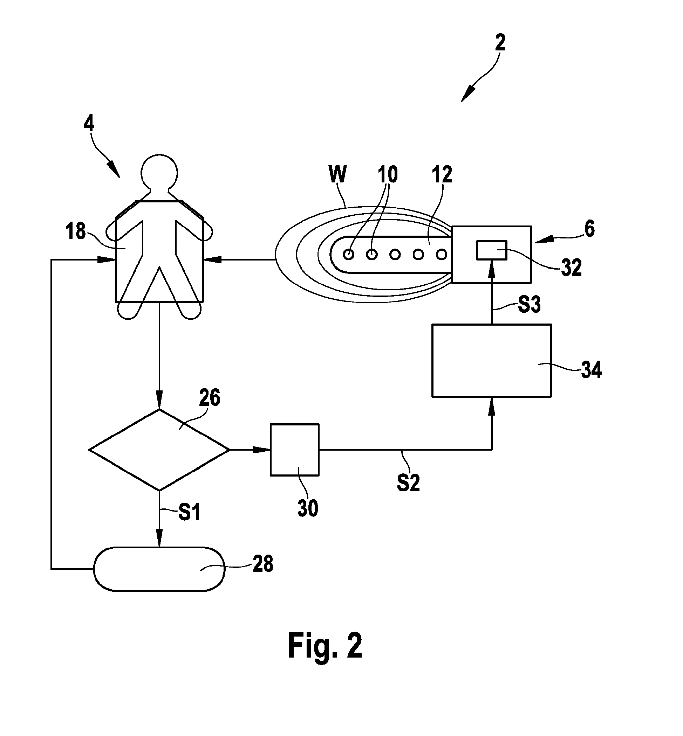

Auf der Seite der Motorkettensäge 6 umfasst die Vorrichtung 2 eine Mehrzahl von Sendern 10 zur Erzeugung von elektromagnetischen Feldern. Die Sender 10 sind in regelmäßigen Abständen entlang eines Sägeschwerts 12 der Kettensäge 6 angeordnet und strahlen nach beiden Seiten des Sägeschwerts 12 ab. Die Sender 10 werden beim Starten eines Verbrennungsmotors 14 der Motorkettensäge 6 mit einem in einem Gehäuse 16 der Motorkettensäge 6 untergebrachten, als Stromversorgung dienenden Akku (nicht sichtbar) verbunden und dadurch automatisch aktiviert. Alternativ können die Sender jedoch auch durch einen vom Verbrennungsmotors 14 der Motorkettensäge 6 getriebenen Generator (nicht dargestellt) mit Strom versorgt werden. Nach der Aktivierung der Sender 10 werden von diesen hochfrequenten Wechselfelder W erzeugt, welche die Sender 10 beiderseits des Sägeschwerts 12 etwa halbkugelförmig umgeben, wobei die magnetische Feldstärke der Wechselfelder W (Fig. 2) mit der Entfernung vom jeweiligen Sender 10 abnimmt. Alle Sender 10 sind etwa in demselben Abstand von den beiden Trumen der umlaufenden Sägekette 8 angeordnet.

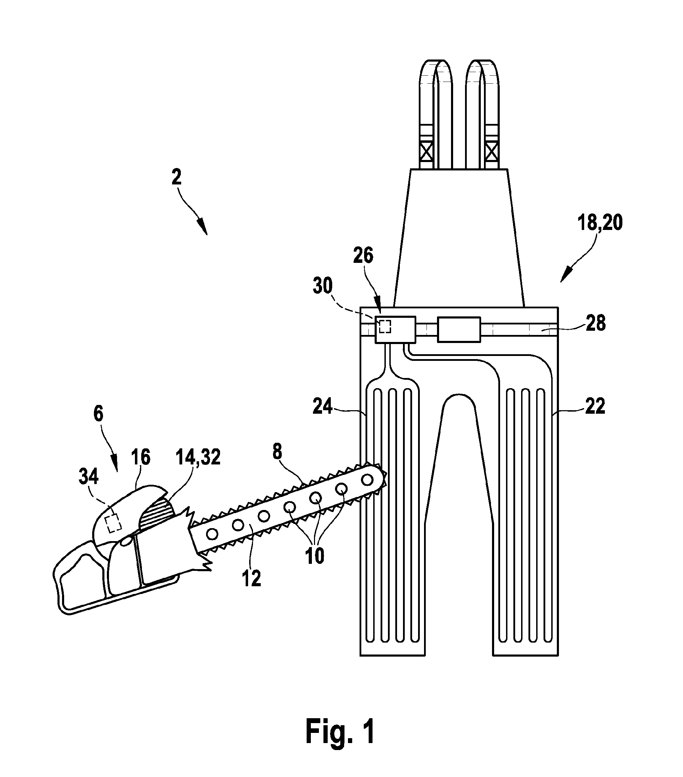

An Stelle mehrerer, entlang des Sägeschwertes 12 angeordneter Sender 10 kann jedoch auch ein einziger, zweckmäßig im Gehäuse 16 der Kettensäge 6 untergebrachter Sender (nicht dargestellt) verwendet werden, der die zur Aufrechterhaltung eines oder mehrerer elektromagnetischer Felder benötigte Energie über eine oder mehrere Antennen abstrahlt, die an Stelle der in Fig. 1 dargestellten Sender 10 an einer oder mehreren Stellen entlang des Sägeschwertes 12 angeordnet ist oder sind.

Auf der Seite des zu schützenden Benutzers umfasst die Vorrichtung 2 eine für den Benutzer bestimmte Schutzbekleidung 18, die u.a. eine Hose 20, eine Jacke (nicht dargestellt), Schuhwerk, Handschuhe und/oder einen Schutzhelm (nicht dargestellt) einschließen kann. Wie in Fig. 1 beispielhaft an den Vorderseiten von Hosenbeinen der Hose 20 dargestellt, enthält die Schutzbekleidung 18 an denjenigen Stellen, an denen ein Kontakt mit der Sägekette 8 der Kettensäge 6 möglich oder wahrscheinlich ist, eine oder mehrere Leiterschleifen 22, 24. Die in Bekleidungsstücke, d.h. in die Hose 20 und die Jacke und/oder Handschuhe der Schutzbekleidung 18 integrierten Leiterschleifen 22, 24 bestehen jeweils aus metallischen Leitern, die zum Beispiel als dünne Fasern ausgebildet sein können, welche einen Teil eines Gewebes oder Gewirks der Hose 20 bzw. Jacke bilden. Die in andere Teile der Schutzbekleidung, wie Schuhwerk oder einen Schutzhelm, integrierten Leiterschleifen (nicht dargestellt) können demgegenüber in das Material eingeformt oder zwischen zwei benachbarten Materialschichten angeordnet sein.

Wie in Fig. 1 dargestellt, sind die Leiterschleifen 22, 24 der Schutzbekleidung 18 jeweils getrennt voneinander in Parallelschaltung mit einer Mess- und Auswerteeinheit 26 verbunden, die in Fig. 1 vom Benutzer 4 an einem Gürtel 28 der Hose 20 getragen wird. Die Mess- und Auswerteeinheit 26 misst frequenzabhängig die von den Wechselmagnetfeldern W der Sender 10 in den Leiterschleifen 22, 24 induzierten Spannungen und vergleicht bei 26 in Fig. 2 die gemessenen Spannungen mit einem vorbestimmten Schwellenwert, der einem gewünschten Mindestsicherheitsabstand zwischen der Sägekette 8 und der Schutzbekleidung 18 entspricht. Wenn die gemessene Spannung in sämtlichen Leiterschleifen 22, 24 unterhalb des Schwellenwertes liegt, kehrt die Mess- und Auswerteeinheit 26 in einem Schritt S1 zum Beginn der Mess- und Auswerteroutine bei 28 in Fig. 2 zurück und nimmt eine erneute Messung vor. Wenn jedoch die gemessene Spannung in einer oder mehreren Leiterschleifen 22, 24 den vorbestimmten Schwellenwert übersteigt, wird dies von der Mess-und Auswerteeinheit 26 als Anzeichen dafür gewertet, dass der gewünschte Mindestsicherheitsabstand zwischen der Sägekette 8 und der Schutzbekleidung 18 an mindestens einer Stelle unterschritten wird und somit die Gefahr eines Kontakts zwischen der Sägekette 8 und der Schutzbekleidung 18 besteht.

Um Verletzungen des Benutzers 4 sicher zu verhindern, wird in einem solchen Fall in einem Schritt S2 der Verbrennungsmotor 14 der Motorkettensäge 6 abgeschaltet, so dass die Sägekette 8 bei einem eventuellen Kontakt mit der Schutzbekleidung 18 ohne Antrieb ist. Dazu weist die Vorrichtung 2 auf der Seite des zu schützenden Benutzers 4 einen mit der Mess- und Auswerteeinheit 26 verbundenen, zum Beispiel im Gehäuse der Mess- und Auswerteeinheit 26 angeordneten Sender 30 und auf der Seite der Motorkettensäge 6 einen mit einer Motorsteuerung 32 des Verbrennungsmotors verbundenen, zum Beispiel im Gehäuse 16 der Motorkettensäge 6 angeordneten Empfänger 34 auf. Wenn der Mindestsicherheitsabstand zwischen der Sägekette 8 und der Schutzbekleidung 18 unterschritten wird und daher die von der Mess- und Auswerteeinheit 26 gemessene Spannung in einer oder mehreren Leiterschleifen 22, 24 den vorbestimmten Schwellenwert übersteigt, erzeugt die Mess- und Auswerteeinheit 26 im Schritt S2 ein Abschaltsignal. Dieses Abschaltsignal wird vom Sender 30 an den Empfänger 34 und von dort unmittelbar nachfolgend im Schritt S3 zur Motorsteuerung 32 übermittelt, was eine sofortige Abschaltung des Verbrennungsmotors 14 der Motorkettensäge 6 zur Folge hat.

## Patentansprüche

1. Verfahren zum Schutz einer Person vor Verletzungen durch ein von einem Motor angetriebenes Werkzeug oder Arbeitsgerät, insbesondere durch eine Motorkettensäge, **dadurch gekennzeichnet, dass** ein das Werkzeug oder Arbeitsgerät (6) mindestens teilweise umgebendes elektromagnetisches Feld (W) erzeugt wird, dass in mindestens einer in einer Schutzbekleidung (18) der Person enthaltenen Leiterschleife (22, 24) eine Spannung induziert wird, wenn das Werkzeug oder Arbeitsgerät (6) an die Schutzbekleidung (4) angenähert wird, und dass das Werkzeug oder Arbeitsgerät (6) deaktiviert wird, wenn die induzierte Spannung einen vorbestimmten Schwellenwert übersteigt.

2. Verfahren nach Anspruch 1, **dadurch gekennzeichnet, dass** um das Werkzeug oder Arbeitsgerät (6) herum ein hochfrequentes elektromagnetisches Wechselfeld (W) erzeugt wird.

3. Verfahren nach Anspruch 1 oder 2, **dadurch gekennzeichnet, dass** die in der Leiterschleife (22, 24) induzierte Spannung von einer mit der Leiterschleife verbundenen Mess- und Auswerteeinrichtung (26) gemessen und mit dem vorbestimmten Schwellenwert verglichen wird.

4. Verfahren nach einem der vorangehenden Ansprüche, **dadurch gekennzeichnet, dass** ein Abschaltsignal an eine Motorsteuerung (32) des Werkzeugs oder Arbeitsgeräts (6) übertragen wird, um das Werkzeug oder Arbeitsgerät (6) zu deaktivieren.

5. Verfahren nach Anspruch 4, **dadurch gekennzeichnet, dass** das Abschaltsignal drahtlos zu einem mit der Motorsteuerung (32) des Werkzeugs oder Arbeitsgeräts (6) verbundenen Empfänger (34) übertragen wird.

6. Vorrichtung zum Schutz einer Person vor Verletzungen durch ein von einem Motor angetriebenes Werkzeug oder Arbeitsgerät, insbesondere durch eine Motorkettensäge, **gekennzeichnet durch** mindestens einen mit dem Werkzeug oder Arbeitsgerät (6) verbundenen Sender (10) zur Erzeugung eines das Werkzeug oder Arbeitsgerät (6) mindestens teilweise umgebenden elektromagnetischen Feldes (W), eine für die zu schützende Person (4) bestimmte Schutzbekleidung (18), die mindestens eine Leiterschleife (22, 24) enthält, sowie eine Einrichtung (26, 30, 32, 34) zum Deaktivieren des Werkzeugs (6), wenn eine bei einer Annäherung des oder eines Senders (10) des Werkzeugs oder Arbeitsgeräts (6) an die Schutzbekleidung (18) in der Leiterschleife (22, 24) induzierte Spannung einen vorbestimmten Schwellenwert übersteigt.

7. Vorrichtung nach Anspruch 6, **dadurch gekennzeichnet, dass** das Werkzeug oder Arbeitsgerät (6) mindestens eine, mit dem Sender (10) verbundene Antenne umfasst.

8. Vorrichtung nach Anspruch 6 oder 7, **dadurch gekennzeichnet, dass die** Einrichtung (26, 30, 32, 34) zum Deaktivieren des Werkzeugs oder Arbeitsgeräts (6) eine Motorsteuerung (32) eines Verbrennungsmotors (14) des Werkzeugs oder Arbeitsgeräts (6) umfasst.

9. Vorrichtung nach einem der Ansprüche 6 bis 8, **dadurch gekennzeichnet, dass** die Einrichtung (26, 30, 32, 34) zum Deaktivieren des Werkzeugs oder Arbeitsgeräts (6) eine mit der Leiterschleife (22, 24) der Schutzbekleidung (18) verbundene Mess- und Auswerteeinrichtung (36) umfasst, welche die in der Leiterschleife (22, 24) induzierte Spannung misst und mit einem vorgegebenen Schwellenwert vergleicht.

10. Vorrichtung nach Anspruch 9, **dadurch gekennzeichnet, dass** die Schutzbekleidung (18) eine Mehrzahl von Leiterschleifen (22, 24) umfasst, die in Parallelschaltung mit der Mess- und Auswerteeinrichtung (36) verbunden sind.

11. Vorrichtung nach Anspruch 9 oder 10, **dadurch gekennzeichnet, dass** die Mess- und Auswerteeinrichtung (36) Teil der Schutzbekleidung (18) ist.

12. Vorrichtung nach einem der Ansprüche 9 bis 11, **dadurch gekennzeichnet, dass** die Einrichtung (26, 30, 32, 34) zum Deaktivieren des Werkzeugs oder Arbeitsgeräts (6) einen mit der Mess- und Auswerteeinrichtung (36) verbundenen Sender (32) und einen mit einer Motorsteuerung (32) eines Verbrennungsmotors (14) des Werkzeugs oder Arbeitsgeräts (6) verbundenen Empfänger (34) umfasst.

13. Vorrichtung nach einem der Ansprüche 6 bis 12, **dadurch gekennzeichnet, dass** das Werkzeug oder Arbeitsgerät eine Motorkettensäge (4) ist, und dass der mindestens eine Sender (10) oder mindestens eine mit dem Sender (10) verbundene Antenne entlang eines Sägeschwertes (12) der Motorkettensäge (4) angeordnet ist und das elektromagnetische Feld (W) in der Umgebung des Sägeschwertes (12) erzeugt.
